# FASCICULE DE BREVET EUROPEEN

(11) **EP 2 015 965 B1**
(45) Date de publication et mention de la délivrance du brevet: **16.09.2009**
(21) Numéro de dépôt: 07765993.6
(22) Date de dépôt: 03.05.2007
(51) Int. Cl.: B60R 5/04

(54) **DISPOSITIF CACHE BAGAGES DE LONGUEUR REGLABLE POUR COFFRE DE VEHICULE AUTOMOBILE ET VEHICULE CORRESPONDANT**
VORRICHTUNG MIT VERSTELLBARER LÄNGE ZUR GEPÄCKVERSTAUUNG FÜR EINEN KRAFTFAHRZEUG-KOFFERRAUM UND DAMIT AUSGESTATTETES KRAFTFAHRZEUG
LENGTH-ADJUSTABLE DEVICE FOR CONCEALING LUGGAGE FOR MOTOR VEHICLE TRUNK AND MOTOR VEHICLE EQUIPPED WITH SAME

(30) Priorité: 05.05.2006 FR 0604040
(43) Date de publication de la demande: 21.01.2009
(73) Titulaire: Renault S.A.S., 92100 Boulogne-Billancourt (FR)
(72) Inventeur: BORDERIE, Hervé, F-Paris 75019 (FR); FILIPPINI, Fabio, F-92100 Boulogne Billancourt (FR)
(86) Numéro de dépôt international: PCT/FR2007/051212
(87) Numéro de publication internationale: WO 2007/128936

(56) Documents cités:
- EP-A1- 1 375 254
- EP-A2- 1 283 130
- EP-A2- 1 479 564
- EP-A2- 1 498 315
- DE-C1- 4 438 910
- DE-U1- 29 716 037
- DE-U1- 29 818 442
- FR-A1- 2 401 799
- FR-A1- 2 810 935

## Description

L'invention concerne un dispositif cache bagages de longueur réglable pour coffre de véhicule automobile, et notamment pour coffre à hayon, et un véhicule correspondant.

Des dispositifs cache bagages connus comprennent un enrouleur rigide et un rideau souple. Cet enrouleur est généralement formé d'un boîtier à l'intérieur duquel est placé un cylindre sur lequel s'enroule le rideau. Le boîtier, dont la longueur correspond sensiblement à la largeur interne du véhicule, est fixé derrière la deuxième rangée de sièges afin de permettre le déploiement du rideau suivant la direction longitudinale du véhicule au dessus du compartiment de coffre.

Du fait de leur longueur et de leur rigidité, ces dispositifs connus sont trop encombrants pour être rangés transversalement dans le fond du compartiment de coffre, et notamment entre les habillages de passage de roue.

Un tel dispositif cache bagages est décrit dans DE 298 18 442 U conformément au préambule de la revendication 1.

Le document FR 2 845 957 décrit un dispositif cache bagages pouvant être plié de manière à présenter un faible encombrement lorsqu'il n'est pas utilisé. Le dispositif comporte un ou deux rideaux qui se déploient suivant la direction transversale du véhicule. Ce dispositif nécessite toutefois une modification de l'environnement du véhicule pour son montage.

L'invention vise à pallier ces inconvénients en proposant un dispositif cache bagages de longueur variable, nécessitant peu ou pas de modifications de l'environnement des véhicules pourvus des dispositifs cache bagages connus du type à enrouleur.

A cet effet, l'objet de l'invention concerne un dispositif cache bagages pour coffre de véhicule automobile comportant deux supports enrouleurs de forme allongée pourvus chacun d'un rideau, lesdits supports étant logés à l'intérieur d'un boîtier, **caractérisé en ce que** les deux supports sont montés indépendamment l'un de l'autre, leurs axes longitudinaux étant parallèles, et en ce qu'au moins un support est monté coulissant suivant son axe longitudinal par rapport au boîtier, de sorte que la longueur totale des deux supports suivant la direction longitudinale du boîtier soit réglable.

Ainsi, le ou les supports mobiles peuvent être coulissés de sorte que la longueur totale de dispositif suivant la direction longitudinale soit réglable et notamment réduite, ce qui permet de le ranger plus facilement dans le coffre du véhicule, en particulier suivant la direction transversale du véhicule.

De préférence, le dispositif comprend des moyens de blocage de chaque support mobile dans au moins une position de rangement dans laquelle la longueur totale des deux supports suivant la direction longitudinale est inférieure à la somme des longueurs de chacun des supports, et/ou au moins une position d'utilisation dans laquelle la longueur totale des deux supports suivant la direction longitudinale correspond sensiblement à la largeur du coffre du véhicule.

Avantageusement, les supports sont montés de sorte que, lorsqu'ils sont déployés hors des supports, les rideaux s'étendent dans des plans sensiblement parallèles situés l'un en dessous de l'autre, ce qui permet d'éviter tout risque de détérioration des rideaux.

Avantageusement, le boîtier présente une partie centrale par rapport à laquelle chaque support mobile coulisse, et au moins une partie d'extrémité mobile solidaire d'une extrémité d'un support coulissant, chaque partie d'extrémité mobile étant montée coulissante par rapport à ladite partie centrale du boîtier. Les deux supports, que l'un ou les deux soient mobiles, sont ainsi protégés par le boîtier.

Dans un mode de réalisation, les moyens de blocage sont montés entre la partie centrale et chaque partie d'extrémité mobile du boîtier.

Dans un autre mode de réalisation, les moyens de blocage sont montés entre chaque support coulissant et le boîtier.

Avantageusement, les moyens de blocage comprennent au moins un ressort s'étendant longitudinalement.

Avantageusement, l'extrémité longitudinale libre de chaque rideau est pourvue d'un dispositif d'accrochage apte à coopérer avec un élément du véhicule. Cet élément peut par exemple être la tablette arrière du coffre à hayon.

L'invention concerne également un véhicule automobile à coffre à hayon comportant un dispositif cache bagages selon l'invention.

Avantageusement, le véhicule comprend un rangement situé dans le plancher du coffre et s'étendant suivant la direction transversale du véhicule, le rangement étant destiné à recevoir le dispositif cache bagages.

L'invention est maintenant décrite en référence aux dessins annexés, non limitatifs, dans lesquels :
- la figure 1 est une représentation partielle en perspective du coffre d'un véhicule à hayon équipé d'un dispositif cache bagages selon l'invention en position d'utilisation ;
- la figure 2 est une section en Z d'un dispositif cache bagages selon l'invention dans une position d'utilisation ;
- la figure 3 est une section en Z du dispositif cache bagages de la figure 2 dans une position de rangement ;
- la figure 4 est une section en Y du dispositif cache bagages de la figure 2.

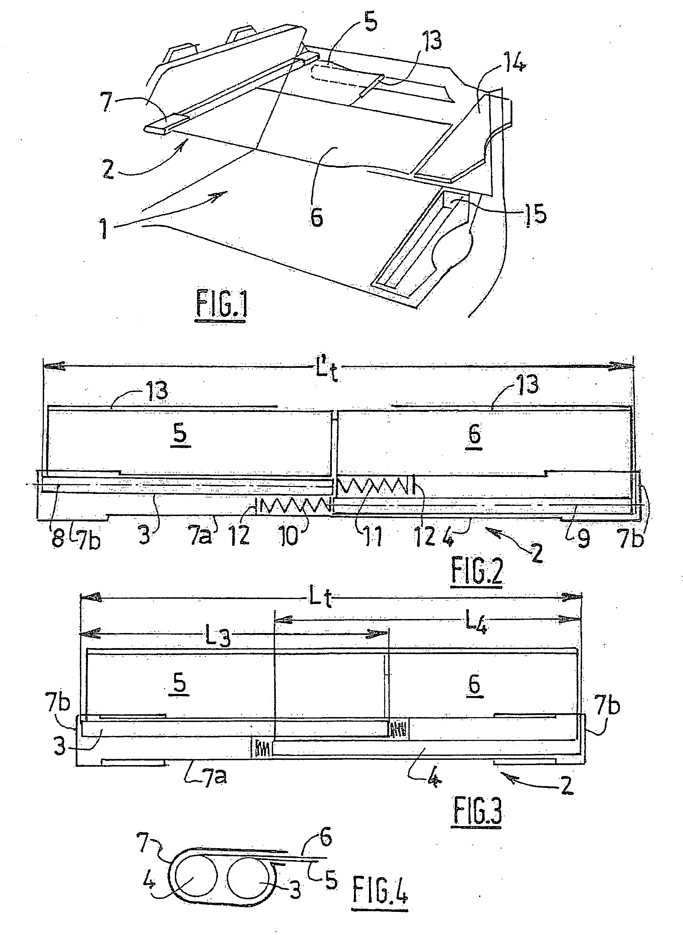

La figure 1 représente l'intérieur du coffre 1 d'un véhicule à hayon pourvu d'un dispositif cache bagages 2 selon l'invention.

Un mode de réalisation du dispositif 2 est décrit en référence aux figures 2 à 4.

Ce dispositif cache bagages 2 comporte deux supports enrouleurs 3, 4 de forme allongée pourvus chacun d'un rideau 5, 6 respectivement, lesdits supports étant logés à l'intérieur d'un boîtier de protection 7. De manière connue, les rideaux peuvent être tirés hors du boîtier et des supports enrouleurs suivant une direction perpendiculaire à la direction longitudinale du boîtier et des supports enrouleurs.

Les deux supports 3, 4 sont montés indépendamment l'un de l'autre, leurs axes longitudinaux 8, 9, respectivement, étant parallèles.

Dans l'exemple représenté, chaque support 3, 4, est monté coulissant suivant son axe longitudinal par rapport au boîtier 7, de sorte que la longueur totale des deux supports suivant la direction longitudinale du boîtier soit réglable.

Par exemple, le dispositif peut être réglé dans une position de rangement, représentée figure 3, dans laquelle la longueur totale Lt des deux supports 3, 4 suivant la direction longitudinale est inférieure à la somme des longueurs L3 et L4, de chacun des supports 3, 4 respectivement, et dans une position d'utilisation, représentée figure 2, dans laquelle la longueur totale L't des deux supports 3, 4 suivant la direction longitudinale est plus grande que la longueur totale Lt en position de rangement.

Par ailleurs, les supports 3, 4 sont montés de sorte que, lorsque les rideaux 5, 6 sont déployés hors des supports, ils s'étendent dans des plans sensiblement parallèles situés l'un en dessous de l'autre, tel que visible sur la figure 4.

Dans cet exemple, dans la position d'utilisation, la longueur totale L't des supports est sensiblement égale à la somme des longueurs L3 et L4 des deux supports 3 et 4 respectivement, de sorte que les bords transversaux des deux rideaux 5, 6 soient adjacents (figure 2).

Le boîtier 7 de protection présente une partie centrale 7a par rapport à laquelle chaque support mobile 3, 4 coulisse et deux parties d'extrémité mobiles 7b.

Chaque partie d'extrémité mobile 7b est solidaire d'une extrémité d'un support coulissant 3, 4, et montée coulissante par rapport à ladite partie centrale 7a du boîtier.

Dans l'exemple représenté sur les figures, des moyens de blocage sont montés entre chaque support coulissant 3, 4 et le boîtier 7. Ces moyens de blocage sont constitués de ressorts 10, 11 s'étendant longitudinalement, chaque ressort étant monté entre une butée 12 solidaire de la partie centrale du boîtier et une extrémité d'un support enrouleur.

Dans l'exemple, les ressorts 10, 11 sont conçus de manière à exercer une poussée longitudinalement sur le support correspondant en direction des extrémités 7b du boîtier. Les ressorts ont ainsi tendance à maintenir les supports dans leurs positions les plus éloignées l'une de l'autre, qui correspond, par exemple, à leur position d'utilisation. Pour rapprocher les supports l'un de l'autre jusqu'à leur position de rangement, il suffit d'exercer une poussée à l'encontre des ressorts sur les extrémités 7b du boîtier.

Afin de limiter la longueur totale L't dans la position d'utilisation, on peut prévoir la présence de butées. Dans l'exemple, ces butées sont constituées par les bords libres de la partie centrale 7a et des parties d'extrémités 7b du boîtier, ces bords présentant des rebords aptes à venir en prise l'un avec l'autre. En l'absence de telles butées, ou si cette longueur L't est supérieure à la largeur de l'habitacle du véhicule, les forces de poussée opposées des ressorts peuvent servir à maintenir le dispositif dans sa position d'utilisation à l'intérieur du véhicule suivant la direction transversale de ce dernier.

Dans une variante non représentée, les moyens de blocage peuvent être montés, par exemple, entre la partie centrale 7a et chaque partie d'extrémité mobile 7b du boîtier.

De préférence, l'extrémité longitudinale libre de chaque rideau est pourvue d'un dispositif d'accrochage 13 apte à coopérer avec un élément du véhicule. Dans l'exemple représenté, ce dispositif d'accrochage 13 coopère avec la tablette 14 du hayon du véhicule. Dans le cas d'un véhicule dont la lunette arrière s'ouvre, il est ainsi possible de décrocher chaque rideau 5, 6 indépendamment l'un de l'autre depuis l'ouverture de la lunette arrière.

Le dispositif cache bagages selon l'invention présente l'avantage de pouvoir être rétracté dans une position de rangement dans laquelle sa longueur totale est inférieure à sa longueur en position d'utilisation, ce qui permet de le ranger à l'intérieur d'un rangement 15 ménagé à cet effet dans le plancher du coffre du véhicule, suivant la direction transversale du véhicule, par exemple entre les habillages des passages de roues (figure 1).

Le maintien du dispositif cache bagages en position de rangement peut alors être exercé par les parois de ce rangement 15, ou bien des moyens de blocage solidaires du dispositif peuvent être envisagés.

En variante, le dispositif cache bagages selon l'invention ne comporte qu'un support mobile.

## Revendications

1. Dispositif cache bagages (2) pour coffre de véhicule automobile comportant deux supports enrouleurs (3, 4) de forme allongée pourvus chacun d'un rideau (5, 6), lesdits supports étant logés à l'intérieur d'un boîtier (7), les deux supports (3, 4) sont montés indépendamment l'un de l'autre, leurs axes longitudinaux (8, 9) étant parallèles, et **caractérisé en ce qu'**au moins un support est monté coulissant suivant son axe longitudinal par rapport au boîtier, de sorte que la longueur totale des deux supports suivant la direction longitudinale du boîtier soit réglable.

2. Dispositif cache bagages selon la revendication 1, **caractérisé en ce qu'**il comprend des moyens de blocage de chaque support mobile dans au moins une position de rangement dans laquelle la longueur totale des deux supports suivant la direction longitudinale est inférieure à la somme des longueurs de chacun des supports, et/ou au moins une position d'utilisation dans laquelle la longueur totale des deux supports suivant la direction longitudinale correspond sensiblement à la largeur du coffre du véhicule.

3. Dispositif cache bagages selon la revendication 1 ou 2, **caractérisé en ce que** les supports (3, 4) sont montés de sorte que, lorsqu'ils sont déployés hors des supports, les rideaux (5, 6) s'étendent dans des plans sensiblement parallèles situés l'un en dessous de l'autre.

4. Dispositif cache bagages selon l'une des revendications 1 à 3, **caractérisé en ce que** le boîtier (7) présente une partie centrale (7a) par rapport à laquelle chaque support mobile coulisse et au moins une partie d'extrémité mobile (7b) solidaire d'une extrémité d'un support coulissant, chaque partie d'extrémité mobile (7b) étant montée coulissante par rapport à ladite partie centrale du boîtier.

5. Dispositif cache bagages selon la revendication 4 dépendante de la revendication 2, **caractérisé en ce que** les moyens de blocage sont montés entre la partie centrale et chaque partie d'extrémité mobile du boîtier.

6. Dispositif cache bagages selon l'une des revendications 2 à 4, **caractérisé en ce que** les moyens de blocage sont montés entre chaque support coulissant et le boîtier.

7. Dispositif cache bagages selon l'une des revendications 2 à 6, **caractérisé en ce que** les moyens de blocage comprennent au moins un ressort (10, 11) s'étendant longitudinalement.

8. Dispositif cache bagages selon l'une des revendications 1 à 7, **caractérisé en ce que** l'extrémité longitudinale libre de chaque rideau est pourvue d'un dispositif d'accrochage apte à coopérer avec un élément du véhicule.

9. Véhicule automobile à coffre à hayon comportant un dispositif cache bagages selon l'une des revendications précédentes.

10. Véhicule automobile selon la revendication 9, **caractérisé en ce qu'**il comprend un rangement (15) situé dans le plancher du coffre et s'étendant suivant la direction transversale du véhicule, le rangement étant destiné à recevoir le dispositif cache bagages (2).

## Claims

1. Luggage cover device (2) for the luggage compartment of a motor vehicle, comprising two winding supports (3, 4) of elongate shape each provided with a curtain (5, 6), the said supports being housed inside a casing (7), the two supports (3, 4) are mounted independently of one another, their longitudinal axes (8, 9) being parallel, and **characterized in that** at least one support is mounted such that it can slide along its longitudinal axis with respect to the casing such that the overall length of the two supports in the longitudinal direction of the casing can be adjusted.

2. Luggage cover device according to Claim 1, **characterized in that** it comprises means of immobilizing each moving support in at least one storage position in which the overall length of the two supports in the longitudinal direction is less than the sum of the lengths of each of the supports, and/or at least one position of use in which the overall length of the two supports in the longitudinal direction corresponds substantially to the width of the luggage compartment of the vehicle.

3. Luggage cover device according to Claim 1 or 2, **characterized in that** the supports (3, 4) are mounted in such a way that when deployed out of the supports, the curtains (5, 6) extend in substantially parallel planes situated one below the other.

4. Luggage cover device according to one of Claims 1 to 3, **characterized in that** the casing (7) has a central part (7a) with respect to which each moving support slides and at least one moving end part (7b) secured to one end of a sliding support, each moving end part (7b) being mounted such that it can slide with respect to the said central part of the casing.

5. Luggage cover device according to Claim 4 dependent on Claim 2, **characterized in that** the immobilizing means are mounted between the central part and each moving end part of the casing.

6. Luggage cover device according to one of Claims 2 to 4, **characterized in that** the immobilizing means are mounted between each sliding support and the casing.

7. Luggage cover device according to one of Claims 2 to 6, **characterized in that** the immobilizing means comprise at least one spring (10, 11) extending longitudinally.

8. Luggage cover device according to one of Claims 1 to 7, **characterized in that** the free longitudinal end of each curtain is provided with a catching device capable of collaborating with an element of the vehicle.

9. Hatchback motor vehicle comprising a luggage cover device according to one of the preceding claims.

10. Motor vehicle according to Claim 9, **characterized in that** it comprises a storage compartment (15) located in the floor of the luggage compartment and extending in the transverse direction of the vehicle, the storage compartment being intended to be fitted with the luggage cover device (2).

## Patentansprüche

1. Gepäckabdeckvorrichtung (2) für Kraftfahrzeugkofferraum, mit zwei Aufwickelträgern (3, 4) mit länglicher Form, die jeweils mit einem Vorhang (5, 6) versehen sind, wobei die Träger in einem Gehäuse (7) untergebracht sind, wobei die zwei Träger (3, 4) unabhängig voneinander montiert sind und ihre Längsachsen (8, 9) zueinander parallel sind, **dadurch gekennzeichnet, dass** wenigstens ein Träger in Richtung einer Längsachse in Bezug auf das Gehäuse gleitend angebracht ist, derart, dass die Gesamtlänge der zwei Träger in Längsrichtung des Gehäuses einstellbar ist.

2. Gepäckabdeckvorrichtung nach Anspruch 1, **dadurch gekennzeichnet, dass** sie Mittel zum Blockieren jedes beweglichen Trägers in wenigstens einer Aufbewahrungsposition, in der die Gesamtlänge der zwei Träger in Längsrichtung kleiner ist als die Summe jedes der Träger, und/oder in wenigstens einer Verwendungsposition, in der die Gesamtlänge der zwei Träger in der Längsrichtung im Wesentlichen der Breite des Kofferraums des Fahrzeugs entspricht, enthält.

3. Gepäckabdeckvorrichtung nach Anspruch 1 oder 2, **dadurch gekennzeichnet, dass** die Träger (3, 4) in der Weise angebracht sind, dass sich die Vorhänge (5, 6) dann, wenn sie aus den Trägern herausgezogen sind, in im Wesentlichen parallelen, übereinander liegenden Ebenen erstrecken.

4. Gepäckabdeckvorrichtung nach einem der Ansprüche 1 bis 3, **dadurch gekennzeichnet, dass** das Gehäuse (7) einen Mittelabschnitt (7a) aufweist, in Bezug auf den jeder bewegliche Träger gleitet, und wenigstens einen beweglichen Endabschnitt (7b) aufweist, der mit einem Ende eines Gleitträgers fest verbunden ist, wobei jeder bewegliche Endabschnitt (7b) in Bezug auf den Mittelabschnitt des Gehäuses gleitend angebracht ist.

5. Gepäckabdeckvorrichtung nach Anspruch 4, wenn abhängig von Anspruch 2, **dadurch gekennzeichnet, dass** die Blockiermittel zwischen dem Mittelabschnitt und jedem beweglichen Abschnitt des Gehäuses angebracht sind.

6. Gepäckabdeckvorrichtung nach einem der Ansprüche 2 bis 4, **dadurch gekennzeichnet, dass** die Blockiermittel zwischen jedem Gleitträger und dem Gehäuse angebracht sind.

7. Gepäckabdeckvorrichtung nach einem der Ansprüche 2 bis 6, **dadurch gekennzeichnet, dass** die Blockiermittel wenigstens eine Feder (10, 11) enthalten, die sich in Längsrichtung erstreckt.

8. Gepäckabdeckvorrichtung nach einem der Ansprüche 1 bis 7, **dadurch gekennzeichnet, dass** das freie longitudinale Ende jedes Vorhangs mit einer Einhakvorrichtung versehen ist, die mit einem Element des Fahrzeugs zusammenwirken kann.

9. Kraftfahrzeug mit Heckklappen-Kofferraum, das eine Gepäckabdeckvorrichtung nach einem der vorhergehenden Ansprüche enthält.

10. Kraftfahrzeug nach Anspruch 9, **dadurch gekennzeichnet, dass** es einen Stauraum (15) aufweist, der sich im Boden des Kofferraums befindet und sich in Querrichtung des Fahrzeugs erstreckt, wobei der Stauraum dazu bestimmt ist, die Gepäckabdeckvorrichtung (2) aufzunehmen.
